# EUROPEAN PATENT APPLICATION

(11) **EP 2 637 316 A1**
(43) Date of publication of application: **11.09.2013**
(21) Application number: 12194466.4
(22) Date of filing: 27.11.2012
(51) Int. Cl.: H04B 5/00

(54) **Wireless electric power transmission device**

(30) Priority: 06.03.2012 JP 2012049567
(71) Applicant: Kabushiki Kaisha Toshiba, Tokyo (JP)
(72) Inventor: Ishihara, Hiroaki, Tokyo (JP); Onizuka, Kohei, Tokyo (JP); Moritsuka, Fumi, Tokyo (JP); Otaka, Shojii, Tokyo (JP)
(74) Representative: Granleese, Rhian Jane

(57) **Abstract**

According to one embodiment, a wireless electric power transmission device supplies electric power, transmitted wirelessly from a first device, to a load circuit. The device includes a power receiving resonance unit, a detecting unit which detects electric power information corresponding to the electric power supplied to the load circuit, and a control unit. The control unit determines whether to adjust at least one of a resonant frequency of the power receiving resonance unit, an output frequency of an alternating current power supply of the first device, and a resonant frequency of a power transmitting resonance unit of the first device, on the basis of a relationship in terms of magnitude between first electric power information when the impedance is a first impedance and second electric power information when the impedance is a second impedance.

## Description

### FIELD

Embodiments described herein relate generally to a wireless electric power transmission device.

### BACKGROUND

In recent years, a wireless electric power transmission technique for wirelessly transmitting electric power in a noncontact manner using a power transmission coil and a power receiving coil is widely employed in many apparatuses such as an IC card and a cellular phone. The power receiving apparatus is provided with a rectifying circuit for obtaining electric power for driving the power receiving apparatus from an electromagnetic wave transmitted from a power transmission apparatus, and an impedance control circuit for changing the impedance of the power receiving apparatus as seen by the power transmission apparatus. The impedance control circuit changes the impedance so that the output voltage of the rectifying circuit attains a desired value.

However, when the impedance of the power receiving apparatus is increased or decreased, it is not clear whether the output voltage of the rectifying circuit increases or decreases. Therefore, in the past, a step for finding change direction of the output voltage in accordance with change of the impedance (relationship between increase/decrease of the impedance and increase/decrease of the output voltage) is required before controlling the output voltage, and it is difficult to achieve high speed control of the received electric power.

### BRIEF DESCRIPTION OF THE DRAWINGS

FIG. 1 is a schematic configuration diagram illustrating a wireless electric power transmission system according to a first embodiment;
FIG. 2 is a figure illustrating an example of configuration of a capacitor;
FIG. 3 is a graph illustrating an example of relationship between received electric power of a load circuit and load resistance of a power receiving device;
FIG. 4 is a graph illustrating an example of relationship between received electric power of a load circuit and load resistance of a power receiving device;
FIG. 5 is a flowchart for explaining a method for adjusting a resonant frequency according to the first embodiment;
FIGS. 6A and 6B are graphs illustrating an example of relationship between received electric power of a load circuit and load resistance of a power receiving device;
FIG. 7 is a schematic configuration diagram illustrating a wireless electric power transmission system according to a second embodiment;
FIG. 8 is a schematic configuration diagram illustrating a wireless electric power transmission system according to a modification;
FIGS. 9A and 9B are graphs illustrating an example of relationship between received electric power of a load circuit and load resistance of a power receiving device;
FIG. 10 is a figure illustrating an example of configuration of a power transmitting resonance unit and a power receiving resonance unit;
FIG. 11 is a figure illustrating an example of configuration of a power transmitting resonance unit and a power receiving resonance unit; and
FIG. 12 is a graph illustrating an example of relationship between a load resistance value and an electric power transmission efficiency.

### DETAILED DESCRIPTION

According to one embodiment, a wireless electric power transmission device supplies electric power, transmitted wirelessly from a first device, to a load circuit. The device includes a power receiving resonance unit, a detecting unit which detects electric power information corresponding to the electric power supplied to the load circuit, and a control unit. The control unit determines whether to adjust at least one of a resonant frequency of the power receiving resonance unit, an output frequency of an alternating current power supply of the first device, and a resonant frequency of a power transmitting resonance unit of the first device, on the basis of a relationship in terms of magnitude between first electric power information when the impedance is a first impedance and second electric power information when the impedance is a second impedance.

Embodiments will now be explained with reference to the accompanying drawings.

### (First Embodiment)

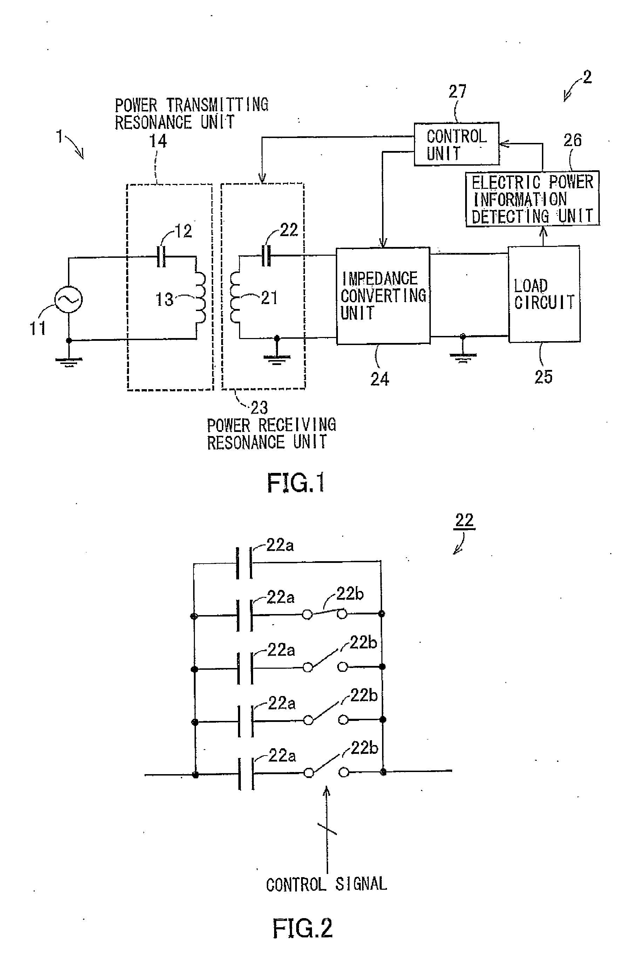

FIG. 1 illustrates a schematic configuration of a wireless electric power transmission system according to the first embodiment of the present invention. The wireless electric power transmission system includes a power transmission device 1 and a power receiving device 2 to which electric power is transmitted (fed) from the power transmission device 1.

The power transmission device 1 includes an alternating current power supply 11 and a power transmitting resonance unit 14 having a capacitor 12 and a power transmission coil 13 connected in series. The power transmitting resonance unit 14 transmits (supplies) a signal, which is output from an alternating current power supply 11 (electric power supplied from the alternating current power supply 11), to the power receiving device 2 from the power transmission coil 13.

The power receiving device 2 includes a power receiving resonance unit 23 having the power receiving coil 21 and the capacitor 22, an impedance converting unit 24, a load circuit 25, an electric power information detecting unit 26, and a control unit 27.

In the power receiving resonance unit 23, a resonant frequency is variable. For example, as illustrated in FIG. 2, the capacitor 22 includes a plurality of capacitive devices 22a and a plurality of switch 22b respectively connected to the capacitive devices 22a, thus capable of changing the capacity in accordance with the number of switches 22b turned on. By changing the capacity of the capacitor 22, the resonant frequency of the power receiving resonance unit 23 can be changed.

When the power receiving coil 21 electromagnetically couples with the power transmission coil 13, the power receiving coil 21 generates induced voltage. This induced voltage is converted (increased/decreased) by the impedance converting unit 24 to be an operation voltage of the load circuit 25. The impedance converting unit 24 may have a voltage conversion function, and, for example, a DC-DC converter can be used as the impedance converting unit 24. The impedance converting unit 24 can change the impedance of the load circuit 25 as seen by the input side of the impedance converting unit 24. In other words, the impedance of the power receiving device 2 as seen by the power transmission device 1 can be changed.

The electric power information detecting unit 26 detects information about electric power supplied to the load circuit 25 (electric power information). For example, the electric power information detecting unit 26 detects an electric power, a voltage, or a current supplied to the load circuit 25, as the electric power information. The electric power information detecting unit 26 notifies the detected electric power information to the control unit 27. In the explanation below, it is the electric power information detecting unit 26 that detects the electric power.

The control unit 27 controls the impedance converting unit 24 such that the impedance of the power receiving device 2 attains a first impedance, and the electric power information at that moment is obtained from the electric power information detecting unit 26. The control unit 27 controls the impedance converting unit 24 such that the impedance of the power receiving device 2 attains a second impedance which is different from the first impedance, and the electric power information at that moment is obtained from the electric power information detecting unit 26. Then, the control unit 27 uses the obtained two pieces of electric power information to determine whether to adjust the resonant frequency of the power receiving resonance unit 23. For example, the control unit 27 can adjust the resonant frequency of the power receiving resonance unit 23 by switching the plurality of switches 22b as shown in FIG. 2 to ON state and OFF state. What kind of values the first impedance and the second impedance have will be explained later. The method for determining whether to adjust the resonant frequency of the power receiving resonance unit 23 will be explained later.

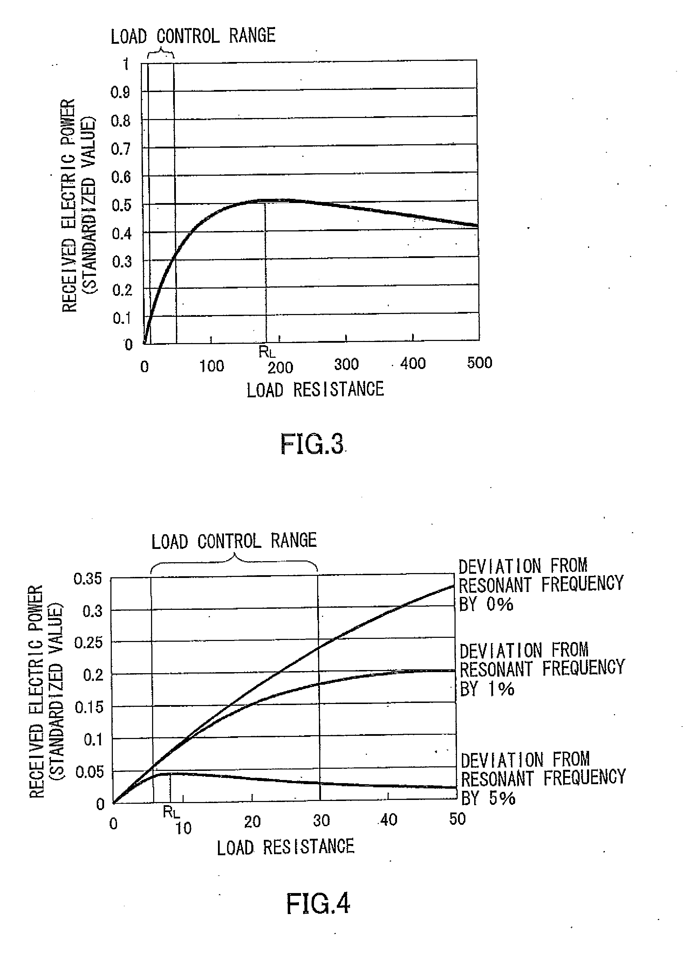

FIG. 3 illustrates an example of relationship between the received electric power of the load circuit 25 and the load resistance (impedance) of the power receiving device 2 in a case where the frequency of the voltage supplied from the alternating current power supply 11, the resonant frequency of the power transmitting resonance unit 14, and the resonant frequency of the power receiving resonance unit 23 are all the same. Here, the load resistance means a load resistance value converted by the impedance converting unit 24.

It is understood from FIG. 3 that the received electric power is a protruding-type function having a peak at one point (R_{L}) in accordance with the load resistance value. For example, when the range of the load resistance value used in the power receiving device 2 (load control range) is smaller than the load resistance value R_{L} at which the received electric power is the maximum as shown in FIG. 3, the received electric power monotonically increases in accordance with the load resistance value in the entire load control range. Therefore, the load resistance may be increased in order to increase the received electric power, and the load resistance may be decreased in order to decrease the received electric power. The load control range is determined according to the design of the load circuit 25 and the impedance converting unit 24. The load control range may also be determined according to, e.g., a range in which the impedance of the power receiving device 2 as seen by the power transmission device 1 may fall and a summation of the load circuit 25 of the power receiving device 2 and the resistance value of the impedance converting unit 24.

When the resonant frequency of the power transmitting resonance unit 14 or the resonant frequency of the power receiving resonance unit 23 becomes different from the frequency of the voltage supplied from the alternating current power supply 11, the load resistance value R_{L} at which the received electric power is the maximum is changed. FIG. 4 illustrates an example of relationship between the received electric power of the load circuit 25 and the load resistance of the power receiving device 2 in a case where the resonant frequency of the power transmitting resonance unit 14 or the resonant frequency of the power receiving resonance unit 23 is different from the frequency of the voltage supplied from the alternating current power supply 11.

In the example as shown in FIG. 4, when the resonant frequency of the power transmitting resonance unit 14 changes by about 5%, the load resistance value R_{L} at which the received electric power is the maximum is less than the maximum value of the load control range. In this case, as described above, the relationship of the monotonic increase of the received electric power according to the load resistance value in the entire load control range is not established, and it is impossible to uniquely determine whether to increase or decrease the load resistance in order to increase the received electric power. For this reason, the control cannot be performed based on the assumption that the received electric power monotonically depends on the load resistance value.

When the relationship of the monotonic increase of the received electric power according to the load resistance value in the load control range is not established, the control unit 27 determines that it is necessary to adjust the resonant frequency, and adjusts the resonant frequency.

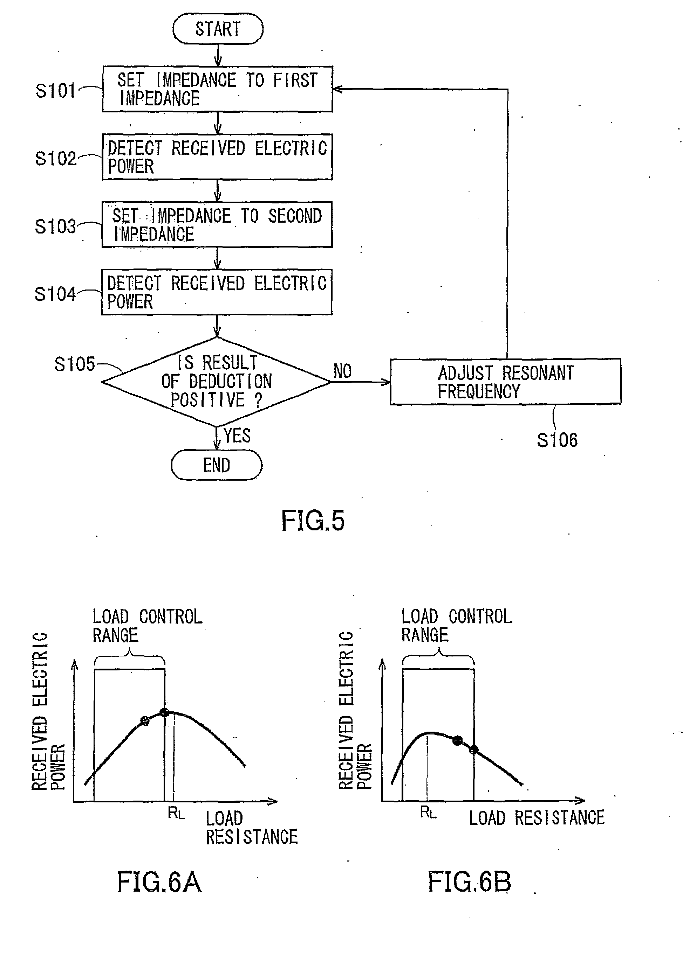

The method for adjusting the resonant frequency will be explained with reference to the flowchart as illustrated in FIG. 5. When the resonant frequency is adjusted, the electric power is transmitted from the power transmission device 1 to the power receiving device 2.

(Step S101) The control unit 27 controls the impedance converting unit 24 so that the impedance of the power receiving device 2 attains the first impedance. Here, the first impedance is the maximum value of the load control range.

(Step S102) the electric power information detecting unit 26 detects the electric power supplied to the load circuit 25 (received electric power) as the electric power information, and notifies the control unit 27 of the electric power information.

(step S103) the control unit 27 controls the impedance converting unit 24 so that the impedance of the power receiving device 2 attains the second impedance. The second impedance is a value slightly less than the first impedance. The second impedance may be set to any value less than the first impedance. For example, the second impedance is set so that the difference between the first impedance and the second impedance is about 10% of the load control range.

(Step S104) the electric power information detecting unit 26 detects the electric power supplied to the load circuit 25 as the electric power information, and notifies the control unit 27 of the electric power information.

(step S105) the control unit 27 deducts the electric power obtained in step S104 from the electric power obtained in step S102, and determines whether the result of deduction is positive or negative.

When the result of deduction is determined to be positive, the load resistance value R_{L} at which the received electric power is the maximum is equal to or more than the maximum value of the load control range as illustrated in FIG. 6A, and the received electric power monotonically increases in accordance with the load resistance value in the entire load control range. Therefore, when the result of deduction is determined to be positive, the adjustment of the resonant frequency is determined to be unnecessary, and the processing is terminated.

On the other hand, when the result of deduction is determined to be negative, the load resistance value R_{L} at which the received electric power is the maximum is less than the maximum value of the load control range as illustrated in FIG. 6B, and the relationship of the monotonic increase of the received electric power according to the load resistance value in the entire load control range is not established. Therefore, when the result of deduction is determined to be negative, the adjustment of the resonant frequency is determined to be necessary, and step S106 is performed.

(Step S106) the control unit 27 adjusts the resonant frequency of the power receiving resonance unit 23. For example, the control unit 27 adjusts the resonant frequency of the power receiving resonance unit 23 by changing the capacity of the capacitor 22. After the resonant frequency of the power receiving resonance unit 23 is adjusted, return to step S101,

With such processing, as shown in FIG. 6A, the relationship of the monotonic increase of the received electric power according to the load resistance value in the entire load control range can be established. After the resonant frequency has been adjusted, the power receiving device 2 causes the control unit 27 to compare desired electric power with the received electric power detected by the electric power information detecting unit 26. When the detected received electric power is less than the desired electric power, the control unit 27 may increase the load resistance. When the detected received electric power is more than the desired electric power, the control unit 27 may decrease the load resistance. When the desired electric power is supplied to the load circuit 25, the direction in which the load resistance is to be changed is uniquely determined, and therefore, the received electric power can be controlled at high speed.

### (Second Embodiment)

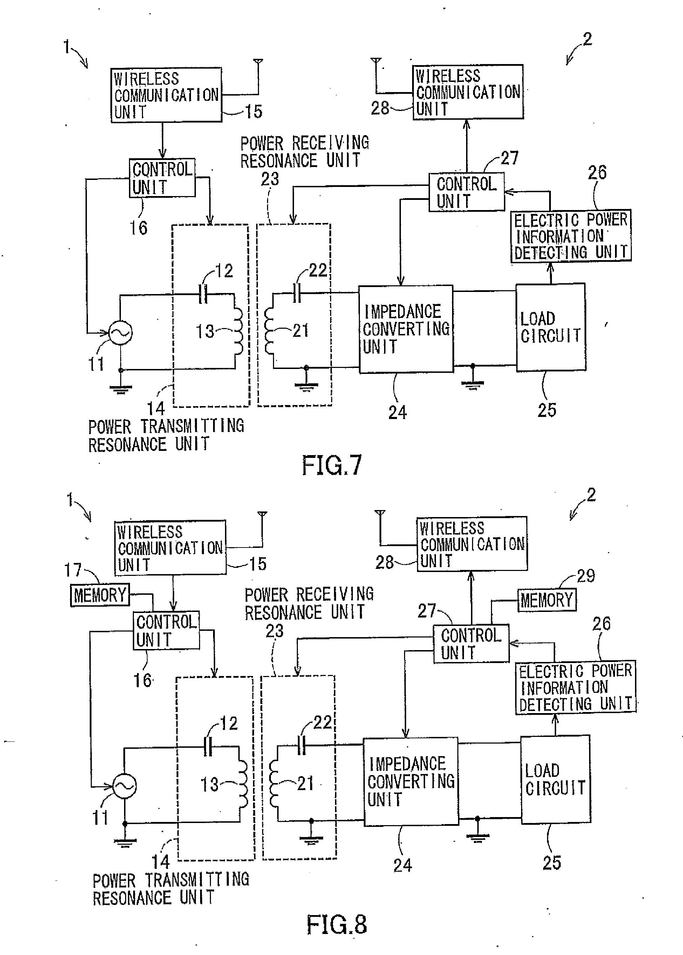

FIG. 7 illustrates a schematic configuration of a wireless electric power transmission system according to the second embodiment of the present invention. In the above first embodiment, the resonant frequency of the power receiving resonance unit 23 is adjusted. However, in the present embodiment, further, a resonant frequency of the power transmitting resonance unit 14 and an output frequency of the alternating current power supply 11 can be adjusted.

As shown in FIG. 7, a power transmission device 1 further includes not only the power transmission device 1 according to the first embodiment as shown in FIG. 1 but also a wireless communication unit 15 and a control unit 16. A power receiving device 2 further includes the configuration of the power receiving device 2 according to the first embodiment as shown in FIG. 1 but also a wireless communication unit 28.

When the result of deduction is determined to be negative in step S105 in FIG. 5, a control unit 27 transmits a frequency adjusting instruction to the power transmission device 1 via a wireless communication unit 28.

When the control unit 16 of the power transmission device 1 receives a frequency adjusting instruction from the power receiving device 2 via the wireless communication unit 15, the control unit 16 adjusts at least one of the resonant frequency of the power transmitting resonance unit 14 and the output frequency of the alternating current power supply 11. For example, the control unit 16 can control the resonant frequency of the power transmitting resonance unit 14 by adjusting the capacity of the capacitor 12 having the same configuration as FIG. 2.

Like the first embodiment, the relationship of the monotonic increase of the received electric power according to the load resistance value in the entire load control range can be established by adjusting at least one of the resonant frequency of the power transmitting resonance unit 14 and the output frequency of the alternating current power supply 11. Accordingly, when the desired electric power is supplied to the load circuit 25, the direction in which the load resistance is to be changed is uniquely determined, and therefore, the received electric power can be controlled at high speed.

When the result of deduction in step S105 in FIG. 5 is determined to be negative, at least one of the resonant frequency of the power receiving resonance unit 23, the resonant frequency of the power transmitting resonance unit 14, and the output frequency of the alternating current power supply 11 may be adjusted. Which parameter is to be adjusted may be determined in accordance with variation of manufacturing process of the power transmission device 1 and the power receiving device 2. For example, when there is less variation of manufacturing process of the power transmission device 1, and there is much variation of manufacturing process of the power receiving device 2, the resonant frequency of the power receiving resonance unit 23 may be adjusted.

Such determination as to whether it is necessary to adjust the resonant frequency and adjustment of the resonant frequency may be done on every occasion before power is transmitted from the power transmission device 1, or may be done with regular interval or with any given timing. Alternatively, as shown in FIG. 8, the power transmission device 1 and the power receiving device 2 may be provided with memories 17, 29, and when the power transmission device 1 and the power receiving device 2 are manufactured or shipped, the determination as to whether it is necessary to adjust the resonant frequency and adjustment of the resonant frequency may be done, and the result of adjustment may be recorded to the memories 17, 29. The memory 17 of the power transmission device 1 records the result of adjustment when the resonant frequency of the power transmitting resonance unit 14 and the output frequency of the alternating current power supply 11 are adjusted. The memory 29 of the power receiving device 2 records the result of adjustment when the resonant frequency of the power receiving resonance unit 23 is adjusted.

### (Third Embodiment)

In the first, second embodiments, the relationship of the monotonic increase of the received electric power according to the load resistance value in the entire load control range is established. Alternatively, the relationship of the monotonic decrease of the received electric power according to the load resistance value in the entire load control range may be established. More specifically, the load resistance value R_{L} at which the received electric power is the maximum is set at a value equal to or less than the minimum value of the load control range.

The method for adjusting the resonant frequency according to the present embodiment is the same as the one shown in the flowchart in FIG. 5. However, the first impedance is the minimum value of the load control range, and the second impedance is a value slightly more than the first impedance.

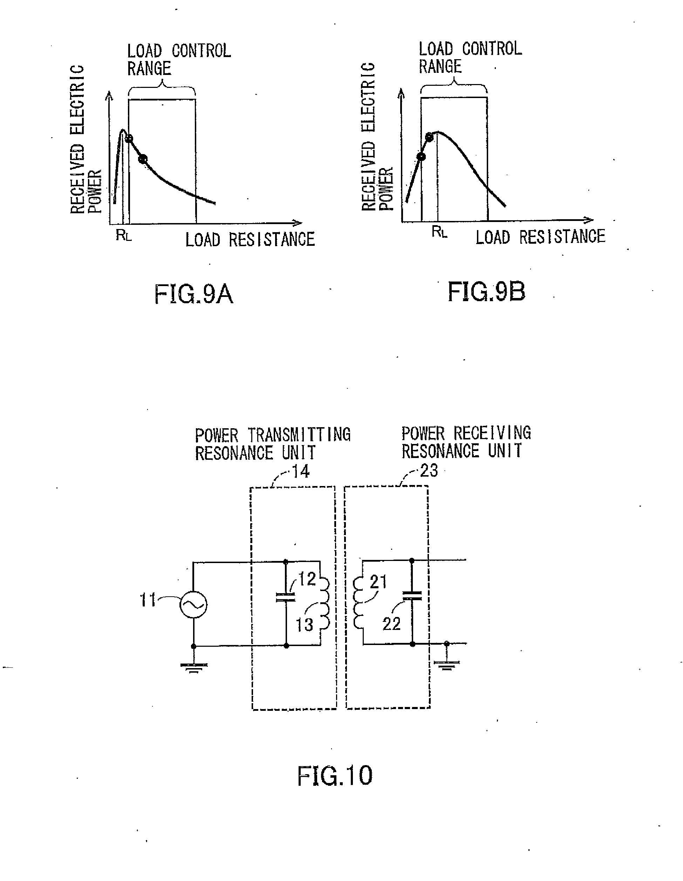

When the result of deduction obtained by deducting the electric power when the load resistance value is the second impedance from the electric power when the load resistance value is the first impedance is positive, the load resistance value R_{L} at which the received electric power is the maximum is equal to or less than the minimum value of the load control range as shown in FIG. 9A, and the received electric power monotonically decreases according to the load resistance value in the entire load control range. Therefore, when the result of deduction is determined to be positive, the adjustment of the resonant frequency is determined to be unnecessary, and the processing is terminated.

On the other hand, when the result of deduction is determined to be negative, the load resistance value R_{L} at which the received electric power is the maximum is more than the minimum value of the load control range as illustrated in FIG. 9B, and the relationship of the monotonic decrease of the received electric power according to the load resistance value in the entire load control range is not established. Therefore, when the result of deduction is determined to be negative, the adjustment of the resonant frequency is determined to be necessary. Accordingly, at least one of the resonant frequency of the power receiving resonance unit 23, the resonant frequency of the power transmitting resonance unit 14, and the output frequency of the alternating current power supply 11 is adjusted.

With such processing, as shown in FIG. 9A, the relationship of the monotonic decrease of the received electric power according to the load resistance value in the entire load control range can be established. After the resonant frequency has been adjusted, the power receiving device 2 causes the control unit 27 to compare desired electric power with the received electric power detected by the electric power information detecting unit 26. When the detected received electric power is less than the desired electric power, the control unit 27 may decrease the load resistance. When the detected received electric power is more than the desired electric power, the control unit 27 may increase the load resistance. When the desired electric power is supplied to the load circuit 25, the direction in which the load resistance is to be changed is uniquely determined, and therefore, the received electric power can be controlled at high speed.

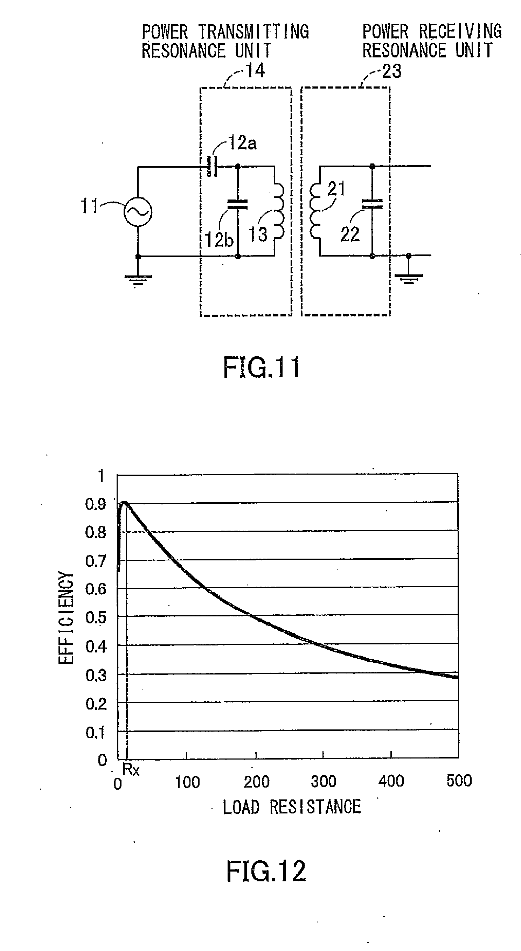

As shown in FIG. 10, in the power transmitting resonance unit 14 of the power transmission device 1, a capacitor 12 and a power transmission coil 13 may be connected in parallel, and in the power receiving resonance unit 23 of the power receiving device 2, a power receiving coil 21 and a capacitor 22 may be connected in parallel. In this configuration, the load resistance value R_{L} at which the received electric power is the maximum is decreased. Therefore, when the configuration as shown in FIG. 10 is employed, the relationship of the monotonic decrease of the received electric power according to the load resistance value in the entire load control range is preferably established like the above third embodiment. Alternatively, as shown in FIG. 11, a capacitor 12a connected in series to the power transmission coil 13 and a capacitor 12b connected in parallel with the power transmission coil 13 may be provided in the power transmitting resonance unit 14 of the power transmission device 1.

FIG. 12 illustrates an example of relationship between the load resistance value and the electric power transmission efficiency. The electric power transmission efficiency is a value obtained by dividing the received electric power by the transmitted electric power. As can be understood from FIG. 12, the electric power transmission efficiency has a peak at one point (R_{X}) according to the load resistance value. The load resistance value R_{X} at which the electric power transmission efficiency is the maximum is configured to be included in the load control range, so that the electric power can be transmitted wirelessly with high efficiency.

When at least one of the resonant frequency of the power receiving resonance unit 23, the resonant frequency of the power transmitting resonance unit 14, and the output frequency of the alternating current power supply 11 is adjusted according to the method of the above embodiment, and as a result, the impedance of the power receiving device 2 attains a value close to an end portion of the load control range (the maximum value, the minimum value), then the voltage transmitted from the power transmission device 1 is preferably controlled, so that the impedance of the power receiving device 2 is close to the central value of the load control range.

For example, when the load resistance value R_{L} at which the received electric power is the maximum is adjusted to become larger than the maximum value of the load control range, and as a result, the impedance of the power receiving device 2 attains a value close to the maximum value of the load control range, then the control unit 27 transmits the power transmission voltage increase instruction to the power transmission device 1 via the wireless communication unit 28 (see FIG. 7). When the control unit 16 of the power transmission device 1 receives a power transmission voltage increase instruction via the wireless communication unit 15, the output voltage of the alternating current power supply 11 is raised. Accordingly, the received electric power of the power receiving device 2 increases and the impedance decreases, so that the impedance of the power receiving device 2 can be changed to a value closer to the central value of the load control range. As described above, the impedance of the power receiving device 2 can be changed to a value closer to the central value of the load control range, so that a wide control range of the impedance can be ensured when the received electric power is controlled at high speed.

In the above embodiment, the control unit 27 of the power receiving device 2 deducts the electric power obtained in step S104 from the electric power obtained in step S102 in FIG. 5, and determines whether to adjust at least one of the resonant frequency of the power receiving resonance unit 23, the resonant frequency of the power transmitting resonance unit 14, and the output frequency of the alternating current power supply 11, on the basis of the positive/negative sign of the result of deduction. Alternatively, the control unit 16 of the power transmission device 1 (see FIG. 7) may perform this determination processing. In this case, the control unit 27 of the power receiving device 2 controls the impedance of the impedance converting unit 24, and the electric power information detected by the electric power information detecting unit 26 is transmitted to the power transmission device 1 via the wireless communication unit 28. The control unit 16 performs the determination processing of step S105 of FIG. 5. When the resonant frequency of the power receiving resonance unit 23 is determined to be adjusted, the control unit 16 gives the resonant frequency adjusting instruction to the control unit 27 of the power receiving device 2 via the wireless communication unit 28.

In the flowchart as shown in FIG. 5, the setting value of the first impedance and the setting value of the second impedance may be set oppositely. In that case, the positive/negative sign of the result of deduction in step S105 is treated oppositely.

In the above first, second embodiments, the first impedance is the maximum value of the load control range, and the second impedance is a value slightly less than the first impedance. Alternatively, the first impedance may slightly larger than the maximum value of the load control range, and the second impedance may be set the maximum value of the load control range.

In the above third embodiment, the first impedance is the minimum value of the load control range, and the second impedance is a value slightly larger than the first impedance. Alternatively, the first impedance may be a value slightly less than the minimum value of the load control range, and the second impedance may be the minimum value of the load control range.

In the above embodiment, the relationship of the monotonic increase (or monotonic decrease) of the received electric power according to the load resistance value in the entire load control range is established, and when desired electric power is supplied to the load circuit 25, the direction in which the load resistance is changed is uniquely defined, and the received electric power is controlled at high speed. Therefore, when the change of the electric power caused by the change of the load resistance is different from the expected direction, certain malfunction and change may have occurred in the wireless electric power transmission system, and accordingly, the power transmission may be stopped. For example, the control unit 27 determines to stop the power transmission, and instructs the power transmission device 1 to stop the power transmission, or the control unit 16 determines to stop the power transmission. In this configuration, change and occurrence of abnormality of the system can be detected. In order to follow the change of the system, the processing as shown in FIG. 5 may be performed again after the power transmission is stopped, and thereafter, the power transmission may be resumed.

While certain embodiments have been described, these embodiments have been presented by way of example only, and are not intended to limit the scope of the inventions. Indeed, the novel methods and systems described herein may be embodied in a variety of other forms; furthermore, various omissions, substitutions and changes in the form of the methods and systems described herein may be made without departing from the spirit of the inventions. The accompanying claims and their equivalents are intended to cover such forms or modifications as would fall within the scope and spirit of the inventions.

## Claims

1. A wireless electric power transmission device for supplying electric power, transmitted wirelessly from a first device, to a load circuit, the wireless electric power transmission device comprising:
a power receiving resonance unit including a power receiving coil and a capacitor;
an impedance converting unit configured to change an impedance of the wireless electric power transmission device as seen by the first device, and supply the electric power from the power receiving resonance unit to the load circuit;
a detecting unit configured to detect electric power information corresponding to the electric power supplied to the load circuit; and
a control unit configured to control the impedance converting unit, and determine whether to adjust at least one of a resonant frequency of the power receiving resonance unit, an output frequency of an alternating current power supply of the first device, and a resonant frequency of a power transmitting resonance unit of the first device, on the basis of a relationship in terms of magnitude between first electric power information detected by the detecting unit when an impedance of the wireless electric power transmission device is set to a first impedance and second electric power information detected by the detecting unit when an impedance of the wireless electric power transmission device is set to a second impedance which is different from the first impedance.

2. The device according to claim 1,
wherein the first impedance is a maximum value in a first range in which the impedance of the wireless electric power transmission device as seen by the first device may fall, and the second impedance is a value less than the maximum value,
wherein when the first electric power information is less than the second electric power information, the control unit determines to adjust at least one of the resonant frequency of the power receiving resonance unit, the output frequency of the alternating current power supply, and the resonant frequency of the power transmitting resonance unit.

3. The device according to claim 1,
wherein the first impedance is a minimum value in a first range in which the impedance of the wireless electric power transmission device as seen by the first device may fall, and the second impedance is a value more than the minimum value,
wherein when the first electric power information is less than the second electric power information, the control unit determines to adjust at least one of the resonant frequency of the power receiving resonance unit, the output frequency of the alternating current power supply, and the resonant frequency of the power transmitting resonance unit.

4. The device according to claim 1, further comprising a wireless communication unit configured to transmit, to the first device, a control signal for instructing adjustment of a frequency, when the control unit determines to adjust the output frequency of the alternating current power supply or the resonant frequency of the power transmitting resonance unit.

5. The device according to claim 1, wherein the first range in which the impedance of the wireless electric power transmission device as seen by the first device may fall includes a load resistance value at which an electric power transmission efficiency is maximum.

6. The device according to claim 1, wherein the electric power information is a value of an electric power, a voltage, or a current supplied to the load circuit.

7. The device according to claim 2, wherein in a case where the electric power supplied to the load circuit is less than a predetermined value in an operational state after at least one of the resonant frequency of the power receiving resonance unit, the output frequency of the alternating current power supply, and the resonant frequency of the power transmitting resonance unit has been adjusted, the control unit controls the impedance converting unit so as to increase the impedance of the wireless electric power transmission device when the electric power supplied to the load circuit is less than a predetermined value and controls the impedance converting unit so as to decrease the impedance of the wireless electric power transmission device when the electric power supplied to the load circuit is more than a predetermined value.

8. The device according to claim 3, wherein in a case where the electric power supplied to the load circuit is less than a predetermined value in an operational state after at least one of the resonant frequency of the power receiving resonance unit, the output frequency of the alternating current power supply, and the resonant frequency of the power transmitting resonance unit has been adjusted, the control unit controls the impedance converting unit so as to decrease the impedance of the wireless electric power transmission device when the electric power supplied to the load circuit is less than a predetermined value and controls the impedance converting unit so as to increase the impedance of the wireless electric power transmission device when the electric power supplied to the load circuit is more than a predetermined value.

9. The device according to claim 8, wherein the power receiving coil and the capacitor are connected in parallel.

10. The device according to claim 7, wherein in a case where the electric power supplied to the load circuit decreases when the impedance of the wireless electric power transmission device is increased, or in a case where the electric power supplied to the load circuit increases when the impedance of the wireless electric power transmission device is decreased, the control unit instructs the first device to stop power transmission.

11. The device according to claim 8, wherein in a case where the electric power supplied to the load circuit increases when the impedance of the wireless electric power transmission device is increased, or in a case where the electric power supplied to the load circuit decreases when the impedance of the wireless electric power transmission device is decreased, the control unit instructs the first device to stop power transmission.

12. The device according to claim 1, further comprising a memory configured to record a result of adjustment when the control unit adjusts the resonant frequency of the power receiving resonance unit.

13. A wireless electric power transmission device for wirelessly transmitting electric power to a power receiving device having a power receiving resonance unit and a load circuit, the wireless electric power transmission device comprising:
an alternating current power supply;
a power transmitting resonance unit including a power receiving coil and a capacitor, and transmitting the electric power, supplied from the alternating current power supply, to the power receiving device;
a wireless communication unit configured to receive, from the power receiving device, first electric power information corresponding to the electric power supplied to the load circuit when an impedance of the power receiving device is set to a first impedance, and second electric power information corresponding to the electric power supplied to the load circuit when the impedance of the power receiving device is set to a second impedance which is different from the first impedance;
and
a control unit configured to determine whether to adjust at least one of a resonant frequency of the power receiving resonance unit, an output frequency of the alternating current power supply, and a resonant frequency of the power transmitting resonance unit, on the basis of a relationship in terms of magnitude between the first electric power information and the second electric power information.

14. The device according to claim 13,
wherein the first impedance is a maximum value in a first range in which the impedance of the power receiving device as seen by the power transmission device may fall, and the second impedance is a value less than the maximum value,
wherein when the first electric power information is less than the second electric power information, the control unit determines to adjust at least one of the resonant frequency of the power receiving resonance unit, the output frequency of the alternating current power supply, and the resonant frequency of the power transmitting resonance unit.

15. The device according to clam 13,
wherein the first impedance is a minimum value in a first range in which the impedance of the power receiving device as seen by the power transmission device may fall, and the second impedance is a value more than the minimum value,
wherein when the first electric power information is less than the second electric power information, the control unit determines to adjust at least one of the resonant frequency of the power receiving resonance unit, the output frequency of the alternating current power supply, and the resonant frequency of the power transmitting resonance unit.

16. The device according to claim 13, wherein the electric power information is a value of an electric power, a voltage, or a current supplied to the load circuit.

17. The device according to claim 13, further comprising a memory configured to record a result of adjustment when the control unit adjusts the output frequency of the alternating current power supply or the resonant frequency of the power transmitting resonance unit.
